# EUROPEAN PATENT APPLICATION

(11) **EP 4 794 299 A1**
(43) Date of publication of application: **19.08.2026**
(21) Application number: 24881201.8
(22) Date of filing: 14.08.2024
(51) Int. Cl.: H04L 65/1016, H04L 65/1069

(54) **COMMUNICATION PROCESSING METHOD, TERMINAL DEVICE AND STORAGE MEDIUM**

(30) Priority: 25.10.2023 CN 202311393900
(71) Applicant: ZTE CORPORATION, Shenzhen, Guangdong 518057 (CN)
(72) Inventor: JI, Juan, Shenzhen, Guangdong 518057 (CN); HU, Yi, Shenzhen, Guangdong 518057 (CN)
(74) Representative: Ziebig Hengelhaupt Intellectual Property Attorneys Patentanwaltskanzlei PartGmbB
(86) International application number: PCT/CN2024/112145
(87) International publication number: WO 2025/086833

(57) **Abstract**

The present application belongs to the technical field of communications. Disclosed are a communication processing method, a terminal device and a storage medium. The communication processing method is applied to a called registration server. The method includes: identifying (S101) a data channel DC capability of a called terminal in a case of receiving a call request of a calling terminal, wherein the call request carries audio and video information and DC media information; splitting (5102) the call request into the audio and video information and the DC media information in a case where the called terminal does not have the DC capability and the called terminal is associated with a called auxiliary terminal having DC capability; initiating (S103) an audio and video call to the called terminal according to the audio and video information; initiating (S104) a DC call to the called auxiliary terminal according to the DC media information; and performing (S105) merging processing on an audio and video media response returned by the called terminal and a DC media response returned by the called auxiliary terminal, and sending a merged response to the calling terminal.

## Description

### CROSS-REFERENCE TO RELATED APPLICATIONS

The present application claims priority to the Chinese patent application No. 202311393900.2 filed on October 25, 2023 to the CNIPA, and entitled "COMMUNICATION PROCESSING METHOD, TERMINAL DEVICE AND STORAGE MEDIUM", the entire content of which is incorporated herein by reference.

### TECHNICAL FIELD

The present application belongs to the technical field of communications, and specifically relates to a communication processing method, a terminal device and a storage medium.

### BACKGROUND

The R16 specification in the 3rd generation partnership project (3GPP) defines the whole process of negotiation and creation of a data channel (DC) of an IP multimedia subsystem (IMS) applied to a terminal device and an Internet side, which has the advantages of safety factor, practicality and stability. 5G voice over new radio, based on an IMS DC capability, provides users with a new immersive experience of multimedia, visualization, and full interaction, with broad application prospects. The 5G voice over new radio requires the use of a terminal device with a DC capability, so the users need to replace terminal devices so as to experience the related services.

### SUMMARY

The present application aims to provide a communication processing method, a terminal device and a storage medium, which at least solve the problem in the related art where users need to replace terminal devices so as to experience 5G voice over new radio.

In a first aspect, an embodiment of the present application proposes a communication processing method, applied to a called registration server. The method includes: identifying a data channel (DC) capability of a called terminal in a case of receiving a call request of a calling terminal, wherein the call request carries audio and video information and DC media information; splitting the call request into the audio and video information and the DC media information in a case where the called terminal does not have the DC capability and the called terminal is associated with a called auxiliary terminal having the DC capability; initiating an audio and video call to the called terminal according to the audio and video information; initiating a DC call to the called auxiliary terminal according to the DC media information; and performing merging processing on an audio and video media response returned by the called terminal and a DC media response returned by the called auxiliary terminal, and sending a merged response to the calling terminal.

In a second aspect, an embodiment of the present application proposes a communication processing method, applied to a calling registration server. The method includes: identifying a DC capability of a calling terminal in a case of receiving a call request of the calling terminal, wherein the call request carries audio and video information; initiating a first call request to a calling auxiliary terminal in a case where the calling terminal does not have the DC capability and the calling terminal is associated with a calling auxiliary terminal having the DC capability; receiving a response of the calling auxiliary terminal, wherein the response carries DC media information; and performing merging processing on the audio and video information and the DC media information, and initiating a second call request to a called terminal, wherein the second call request carries the merged audio and video information and DC media information.

In a third aspect, an embodiment of the present application provides a terminal device, including a processor, a memory, and a program or an instruction stored on the memory and runnable on the processor. The program or the instruction, when executed by the processor, implements the steps of the method as described in the first aspect, or implements the steps of the method as described in the second aspect.

In a fourth aspect, an embodiment of the present application provides a storage medium. The storage medium has a program or an instruction stored thereon, and the program or the instruction, when executed by a processor, implements the steps of the method as described in the first aspect, or implements the steps of the method as described in the second aspect.

In a fifth aspect, a chip is provided. The chip includes a processor and a communication interface, the communication interface is coupled with the processor, and the processor is configured to run a program or an instruction to implement the steps of the method as described in the first aspect, or implement the steps of the method as described in the second aspect.

In a sixth aspect, a computer program/program product is provided. The computer program/program product is stored in a storage medium, and the computer program/program product is executed by at least one processor to implement the steps of the method as described in the first aspect, or implement the steps of the method as described in the second aspect.

### BRIEF DESCRIPTION OF DRAWING(S)

FIG. 1 is a schematic flowchart of a communication processing method provided by an embodiment of the present application.
FIG. 2 is a schematic diagram of media splitting provided by an embodiment of the present application.
FIG. 3 is a schematic diagram of media merging provided by an embodiment of the present application.
FIG. 4 is a schematic diagram of a networking architecture provided by an embodiment of the present application.
FIG. 5 is a detailed flowchart of a communication processing method provided by an embodiment of the present application.
FIG. 6 is a schematic flowchart of another communication processing method provided by an embodiment of the present application.
FIG. 7 is a detailed flowchart of another communication processing method provided by an embodiment of the present application.
FIG. 8 is a schematic structural diagram of a communication processing system provided by an embodiment of the present application.
FIG. 9 is a schematic structural diagram of another communication processing system provided by an embodiment of the present application.
FIG. 10 is a schematic structural diagram of a terminal device provided by an embodiment of the present application.

### DETAILED DESCRIPTION

Embodiments of the present application are described below in detail. Examples of the embodiments are shown in accompanying drawings. The same or similar reference numerals represent the same or similar elements or elements with the same or similar functions throughout. The embodiments described below with reference to the accompanying drawings are exemplary and are merely intended to explain the present application, instead of being construed as limiting the present application. All other embodiments obtained by those ordinarily skilled in the art based on the embodiments in the present application without making creative efforts shall fall within the scope of protection of the present application.

The features of the terms "first" and "second" in the specification and claims of the present application may explicitly or implicitly include one or more of these features. In the descriptions of the present application, unless otherwise noted, the meaning of "a plurality of" is two or more. In addition, "and/or" in the specification and the claims represents at least one of the connected objects. A character "/" generally represents that the associated objects before and after the character are in an "or" relationship.

In the description of the present application, it should be understood that the orientation or positional relationships indicated by the terms "central," "longitudinal," "transverse," "length," "width," "thickness," "upper," "lower," "front," "rear," "left," "right," "vertical," "horizontal," "top," "bottom," "inner," "outer," "clockwise," "anticlockwise," "axial," "radial," "circumferential," etc. are based on the orientation or positional relationships shown in the accompanying drawings and are only for facilitating the description of the present application and simplifying the description, rather than indicating or implying that the device or element referred to must have a particular orientation or be constructed and operated in a particular orientation, and therefore will not be interpreted as limiting the present application.

In the descriptions of the present application, it should be noted that unless otherwise expressly stated and limited, terms "install", "connect" and "link" should be understood in a broad sense, for example, it may be a fixed connection, or a detachable connection, or an integrated connection; may be a mechanical connection, or an electrical connection; and may be a direct connection, or an indirect connection through an intermediate medium, or internal communication of two elements. For those of ordinary skill in the art, the specific meanings of the above terms in the present application can be understood according to specific situations.

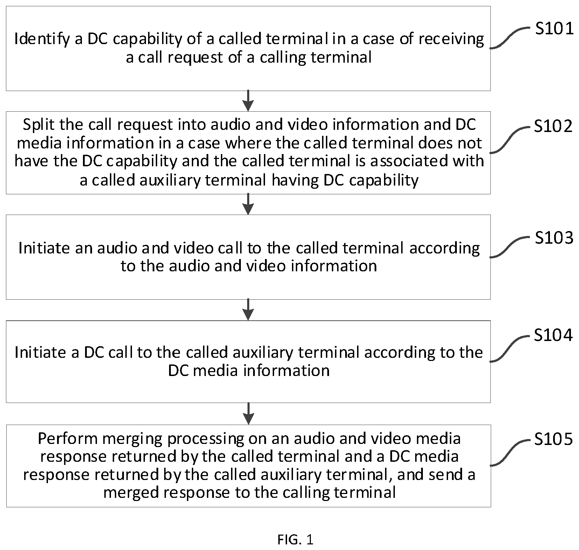

A communication processing method, a terminal device and a storage medium provided by embodiments of the present application are illustrated below in detail through specific embodiments and application scenarios thereof with reference to FIG. 1 to FIG. 10.

As shown in FIG. 1, FIG. 1 is a schematic flowchart of a communication processing method provided by an embodiment of the present application. As shown in FIG. 1, the communication processing method is applied to a called registration server, and the communication processing method may include the contents shown in step S101 to step S105.

In step S101, a DC capability of a called terminal is identified in a case of receiving a call request of a calling terminal.

The call request carries audio and video information and data channel (DC) media information. The audio and video information includes audio information and video information.

It should be noted that the called registration server is a voice over long-term evolution application server (VoLTE AS) to which the called terminal belongs. The called registration server may identify a capability of the called terminal according to registration information of the called server, such as audio and video capabilities, and the DC capability.

That is to say, in a case where the calling terminal initiates a call request to the called terminal, the call request first arrives at the called registration server, and the called registration server identifies the capability of the terminal according to information carried in the call request. For example, if the call request carries DC media information, the called server needs to determine whether the called terminal has the DC capability, so as to establish a call.

In step S102, the call request is split into the audio and video information and the DC media information in a case where the called terminal does not have the DC capability and the called terminal is associated with a called auxiliary terminal having the DC capability.

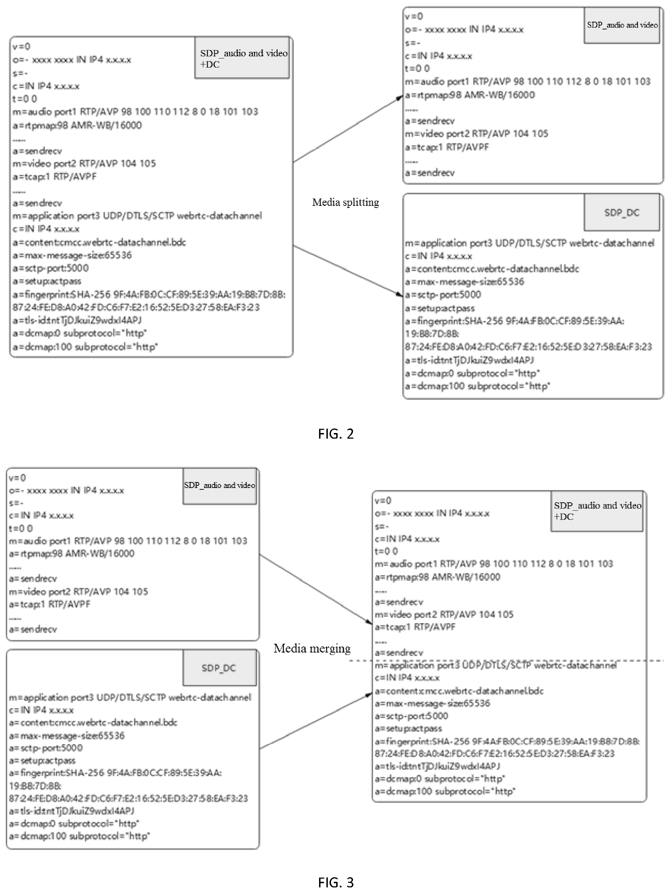

That is to say, if the called terminal does not have the DC capability, it is necessary to further determine whether the called terminal is associated with the called auxiliary terminal having the DC capability. If it is determined that the called terminal is associated with the called auxiliary terminal having the DC capability, splitting processing may be performed on the call request. That is, the media information in the call request is split into the audio and video information and the DC media information, as shown in FIG. 2, so that the call request is separately sent to the called terminal and the called auxiliary terminal, and users may experience DC services.

In step S103, an audio and video call is initiated to the called terminal according to the audio and video information.

In step S104, a DC call is initiated to the called auxiliary terminal according to the DC media information.

The split audio and video information is sent to the called terminal, and the split DC media information is sent to the called auxiliary terminal, so that all call requests of the calling terminal can be received by a called user.

In step S105, merging processing is performed on an audio and video media response returned by the called terminal and a DC media response returned by the called auxiliary terminal, and a merged response is sent to the calling terminal.

That is to say, in a case where the called terminal and the called auxiliary terminal return response information, the media information in the returned response information may be merged and then sent to the calling terminal, as shown in FIG. 3, so that the calling terminal may receive response information corresponding to the call request.

In the embodiment of the present application, the called registration server identifies the DC capability of the called terminal in a case of receiving the call request of the calling terminal, wherein the call request carries the audio and video information and the DC media information; the call request is split into the audio and video information and the DC media information in a case where the called terminal does not have the DC capability and the called terminal is associated with the called auxiliary terminal having the DC capability; then the audio and video call is initiated to the called terminal according to the audio and video information; the DC call is initiated to the called auxiliary terminal according to the DC media information; and finally, merging processing is performed on the audio and video media response returned by the called terminal and the DC media response returned by the called auxiliary terminal, and the merged response is sent to the calling terminal. In the embodiment of the present application, an auxiliary device having the DC capability is added to the call. By performing splitting and merging processing on the audio and video information and the DC media information, and establishing a DC call on the auxiliary device, audio and video calls can be achieved on an original terminal device and DC services can be experienced on auxiliary terminal device without the need to replace a terminal device.

In a possible implementation of the present application, after receiving the call request of the calling terminal, the communication processing method may further include: sending the call request to a voice over new radio capability network element; and requesting a voice over new radio media plane to create a media stream resource in a case of receiving a media anchoring indication sent by the voice over new radio capability network element.

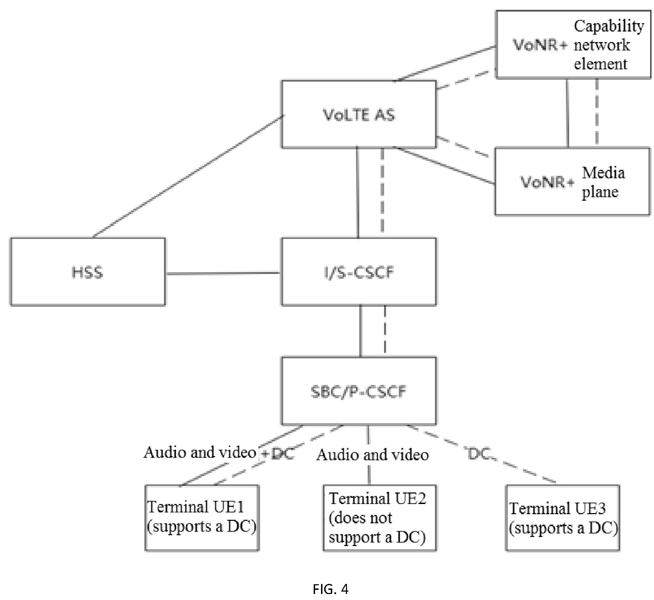

That is to say, after receiving a call request from the calling terminal (i.e., a user UE A in FIG. 4) to call the called terminal (i.e., UE B in FIG. 4), the called VoLTE AS reports a call event notification message to the voice over new radio (VoNR) capability network element (i.e., VoNR+capability network element in FIG. 4) and carries the media information and other content in the call request. After receiving the notification message, the VoNR+capability network element issues the media anchoring indication to the called VoLTE AS. After receiving the anchoring indication, the called VoLTE AS applies to the voice over new radio media plane (i.e., VoNR+media plane in FIG. 4) for creating the media stream resource. After receiving a creation response, the called VoLTE AS identifies that the called terminal does not have the DC capability, and meanwhile, the called terminal sets up an associated called DC auxiliary device (i.e., UE C in FIG. 4) having the DC capability, then the media is split into the audio and video information and the DC media information, so as to subsequently establish sessions with the called terminal and its called auxiliary terminal separately.

FIG. 4 shows a schematic diagram of a networking architecture used in the present embodiment.

The VoLTE AS, serving as a signaling control network element of the entire system, undertakes the control and management of IMS calls, and meanwhile, serving as a service provider network element, provides communication and service capabilities for other applications, and controls service invocation and various media stream forwarding, including forwarding of real-time call media streams. The specific functions of the VoLTE AS may include providing management of audio and video calls, including, but not limited to, call establishment, media transparent transmission, media path redirection, call dismantling, and achieving separation and merging of media streams; providing opening of communication capability and services to the outside, handling service requests from the VoNR+capability network element, converting the service requests into specific control operations, such as allowing the VoNR+capability network element to invoke services provided by this platform, applying for resources on the VoNR+media plane, establishing a DC, etc.; and invoking and controlling various services provided by the VoNR+media plane, including, but not limited to, the application, modification, and deletion of audio and video, DC media resources, etc.

The role of the VoNR+capability network element is to implement various service logics, which may specifically include invoking the VoNR+media plane through the VoLTE AS to achieve image processing, voice processing, conversion, synthesis and other functions; and receiving service results reported by the VoLTE AS or other service components.

The role of the VoNR+media plane is to provide various media services, specifically including a real-time media stream generation service, which converts voice segments into corresponding real-time transport protocol (RTP) media streams; a synthesis service, which synthesizes audio streams, AI video streams, and text streams into a video stream; real-time audio and video stream forwarding, which performs anchoring, processing, and forwarding on the audio and video streams of the current call; and providing interface invocation to the VoLTE AS and the VoNR+capability network element.

The role of an access control entity (SBC/P-CSCF) is to provide signaling and media access for a terminal, and support media stream channels and their forwarding.

The role of a session control entity (I/S-CSCF) is to serve as a query/serve-call session control function, provide basic functions in IMS networks such as registration authentication, session control and call routing for the terminal, and trigger calls to the VoLTE AS.

The role of a home subscriber server (HSS) is to provide user subscription, service data, and other related contents.

In a possible implementation of the present application, the media stream resource may include audio and video media stream information and DC media stream information.

Correspondingly, initiating the audio and video call to the called terminal according to the audio and video information may include: initiating the audio and video call to the called terminal through the audio and video media stream information.

Initiating the DC call to the called auxiliary terminal according to the DC media information may include: initiating the DC call to the called auxiliary terminal through the DC media stream information.

Specifically, the VoLTE AS applies to the VoNR+media plane for creating audio and video media stream resources. The VoNR+media plane returns an audio and video media resource creation response. The VoLTE AS uses the split audio and video media stream information to initiate the audio and video call to the called terminal UE B; and the VoLTE AS uses the split DC media stream information to initiate the DC call to the called auxiliary terminal UE C of the called terminal. That is to say, the VoLTE AS can initiate different calls to different called terminals according to the different media information, so that the corresponding called terminals can receive the corresponding media information.

In a possible implementation of the present application, after initiating the audio and video call to the called terminal, the communication processing method may further include: receiving the audio and video media response returned by the called terminal, wherein the audio and video media response carries response audio and video media stream information; and updating the response audio and video media stream information to the voice over new radio media plane.

That is to say, after receiving the call request, the called terminal UE B replies with the audio and video call response, such as a 183 response, to the called VoLTE AS, and the response carries the response audio and video media stream information. The called VoLTE AS updates the response audio and video media stream information to the VoNR+media plane.

In a possible implementation of the present application, after initiating the DC call to the called auxiliary terminal, the communication processing method may further include: receiving the DC media response returned by the called auxiliary terminal, wherein the DC media response carries response DC media stream information; and updating the response DC media stream information to the voice over new radio media plane.

That is to say, after receiving the call request, the called auxiliary terminal UE C replies with the 200OK response of the DC call to the VoLTE AS, and the response carries the response DC media stream information. The VoLTE AS updates the response DC media stream information to the VoNR+media plane.

In a possible implementation of the present application, before performing merging processing on the audio and video media response returned by the called terminal and the DC media response returned by the called auxiliary terminal, the communication processing method may further include: reporting a DC media anchoring result to the voice over new radio capability network element; and establishing a DC with the called auxiliary terminal.

In the present embodiment, after receiving the audio and video media response returned by the called terminal UE B and the DC media response returned by the called auxiliary terminal UE C, the VoLTE AS reports the DC media anchoring result to the VoNR+capability network element, and completes the establishment of the DC with the called auxiliary device UE C.

The present embodiment can ensure that the calling terminal sending and carrying the DC media information can establish an audio and video call with the called terminal that does not support the DC capability and establish a DC call with the called auxiliary terminal that supports the DC capability through media splitting and merging, achieving the goal of enabling the called terminal to perform the DC services through the called auxiliary terminal.

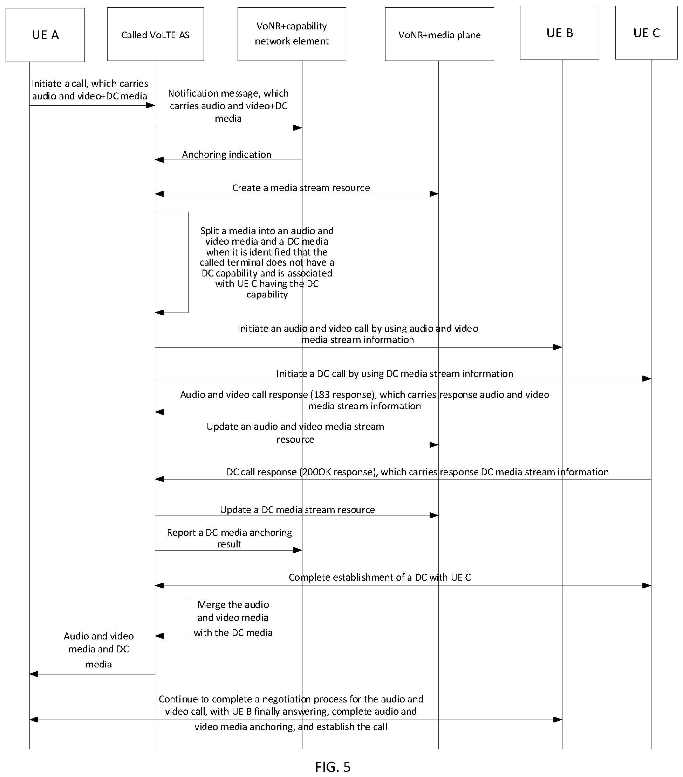

As shown in FIG. 5, FIG. 5 is a detailed flowchart of a communication processing method provided by the present embodiment. Taking a calling terminal as UE A, a called terminal as UE B, and a called auxiliary terminal as UE C as an example.

The UE A initiates a call to the UE B, and the call request carries audio and video information and DC media information. The call request is sent to a called VoLTE AS. After receiving the call request sent by UE A, the called VoLTE AS reports a call event notification message to a VoNR+capability network element and carries media information and other contents in the call request. After receiving the notification message, the VoNR+capability network element issues a media anchoring indication to the called VoLTE AS. The called VoLTE AS receives the anchoring indication and applies to a VoNR+media plane for creating a media stream resource. After receiving a creation response, the called VoLTE AS identifies that the called terminal does not have a DC capability, and meanwhile, the called terminal sets up an associated called DC auxiliary device UE C having the DC capability, then the media is split into the audio and video information and the DC media information. The called VoLTE AS uses the split audio and video media stream information to initiate an audio and video call to the UE B. The called VoLTE AS uses the split DC media stream information to initiate a DC call to the UE C. After receiving the call request, the UE B replies with a response to the audio and video call, such as a 183 response to the called VoLTE AS, and the response carries response audio and video media stream information. The called VoLTE AS updates the response audio and video media stream information to the VoNR+media plane. After receiving the call request, the UE C replies with a response to a DC call, such as a 200OK response to the called VoLTE AS, and the response carries response DC media stream information. The called VoLTE AS updates the response DC media stream information to the VoNR+media plane. The called VoLTE AS reports a DC media anchoring result to the VoNR+capability network element, and completes the establishment of a DC with the UE C. The called VoLTE AS merges a negotiated audio and video media with DC media and sends a merged media to the UE A. The UE A and the UE B continue to complete a negotiation process for the audio and video call, and finally the UE B answers. The audio and video media anchoring is completed, and the call is established. During this process, the called VoLTE AS still needs to perform media splitting and merging to ensure that the media negotiated with a UE B side is audio and video, while the media negotiated with a UE A side is audio and video+DC.

In the present embodiment, the UE A establishes the audio and video call with the UE B that does not support the DC capability and establishes the DC call with the UE C that supports the DC capability, achieving the goal of enabling the UE B to perform the DC services through the UE C. The media during the subsequent call process is switched and updated, and the audio and video and DC still need to perform media splitting and merging according to the media on the terminal side to complete media negotiation.

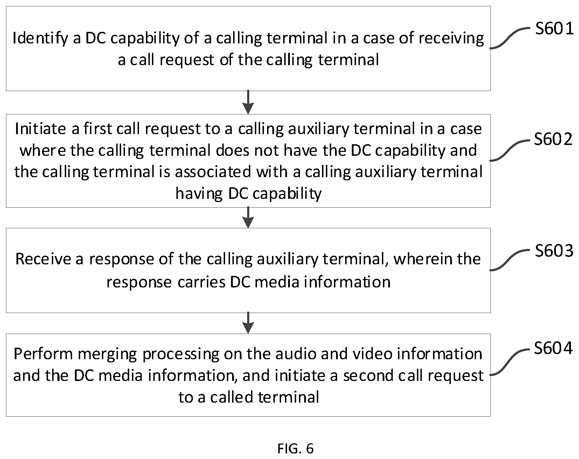

As shown in FIG. 6, FIG. 6 is a schematic flowchart of a communication processing method provided by an embodiment of the present application. As shown in FIG. 6, the communication processing method is applied to a calling registration server, and the communication processing method may include the contents shown in step S601 to step S604.

In step S601, a DC capability of a calling terminal is identified in a case of receiving a call request of the calling terminal.

The call request carries audio and video information. The audio and video information includes audio information and video information.

It should be noted that the calling registration server is VoLTE AS to which the calling terminal belongs. The calling registration server may identify a capability of the calling terminal according to registration information of the calling server, such as audio and video capabilities, and the DC capability.

In step S602, a first call request is initiated to a calling auxiliary terminal in a case where the calling terminal does not have the DC capability and the calling terminal is associated with a calling auxiliary terminal having the DC capability.

That is to say, in a case where the calling terminal initiates the call request to the called terminal, the call request first arrives at the calling registration server. The calling registration server identifies that the calling terminal does not have the DC capability, and meanwhile, the calling terminal sets up the associated calling auxiliary terminal having the DC capability, then the calling registration server initiates the first call request to the calling auxiliary terminal so as to establish a call with DC information.

In step S603, a response of the calling auxiliary terminal is received, wherein the response carries DC media information.

In step S604, merging processing is performed on the audio and video information and the DC media information, and a second call request is initiated to a called terminal.

The second call request carries the merged audio and video information and DC media information.

The calling VoLTE AS merges the media information of the calling terminal and the calling auxiliary terminal, and initiates the second call request carrying the audio and video information and the DC media information to the called terminal. Thus, the calling terminal that does not have the DC capability can establish a DC call with the called terminal having the DC capability.

In the embodiment of the present application, the calling registration server identifies the DC capability of the calling terminal in a case of receiving the call request of the calling terminal, wherein the call request carries the audio and video information; the first call request is initiated to the calling auxiliary terminal in a case where the calling terminal does not have the DC capability and the calling terminal is associated with the calling auxiliary terminal having the DC capability; the response of the calling auxiliary terminal is received, wherein the response carries the DC media information; and merging processing is performed on the audio and video information and the DC media information, and the second call request is initiated to the called terminal, wherein the second call request carries the merged audio and video information and DC media information. In the embodiment of the present application, an auxiliary device having the DC capability is added to the call. By performing merging processing on the audio and video information and the DC media information, and establishing a DC call with the called terminal through a calling auxiliary device, audio and video calls can be achieved on an original terminal device and DC services can be experienced on auxiliary terminal device without the need to replace a terminal device.

In a possible implementation of the present application, after performing merging processing on the audio and video information and the DC media information, the communication processing method may further include: reporting the second call request to a voice over new radio capability network element; requesting a voice over new radio media plane to create a media stream resource in a case of receiving a media anchoring indication sent by the voice over new radio capability network element; and initiating the second call request to the called terminal in a case of receiving a creation response of the voice over new radio media plane.

That is to say, the calling VoLTE AS merges the media information of the calling terminal and the calling auxiliary terminal, and reports a call event notification message to the VoNR+capability network element, wherein the call event notification message carries the merged media information and other contents. After receiving a notification event, the VoNR+capability network element issues the media anchoring indication to the calling VoLTE AS. The VoLTE AS applies to the VoNR+media plane for creating the media stream resource. After receiving a response to applying for creating the media resource, the VoLTE AS initiates the second call request to the called terminal, wherein the second call request carries the audio and video information+DC media information, so that a session is established with the called terminal.

In a possible implementation of the present application, after initiating the second call request to the called terminal, the communication processing method may further include: receiving a call response returned by the called terminal, wherein the call response carries response audio and video media stream information and response DC media stream information; and updating the response audio and video media stream information and the response DC media stream information to the voice over new radio media plane.

That is to say, after receiving the second call request, the called terminal replies with the call response, such as 183 response, to the calling VoLTE AS, and the call response carries the response audio and video media stream information and the response DC media stream information. The calling VoLTE AS updates the current media stream information, including the response audio and video media stream information and the response DC media stream information, to the VoNR+media plane.

In a possible implementation of the present application, the communication processing method may further include: reporting a DC media anchoring result to the voice over new radio capability network element; and establishing a DC with the calling auxiliary terminal.

That is to say, after receiving the response DC media stream information returned by the called terminal, the calling VoLTE AS reports the DC media anchoring result to the VoNR+capability network element, and completes the establishment of the DC with the calling auxiliary terminal.

In the present embodiment, the DC is established between the calling auxiliary terminal associated with the calling terminal and the called terminal, so that the purpose of performing DC services between the calling terminal that does not support the DC capability and the called terminal that supports the DC capability is achieved.

In a possible implementation of the present application, after receiving the call response returned by the called terminal, the communication processing method may further include: separating the response audio and video media stream information in the call response; and sending the response audio and video media stream information to the calling terminal.

That is to say, the calling terminal only receives the response audio and video media stream information returned by the called terminal, while the response DC media stream information is sent to the calling auxiliary terminal associated with the calling terminal.

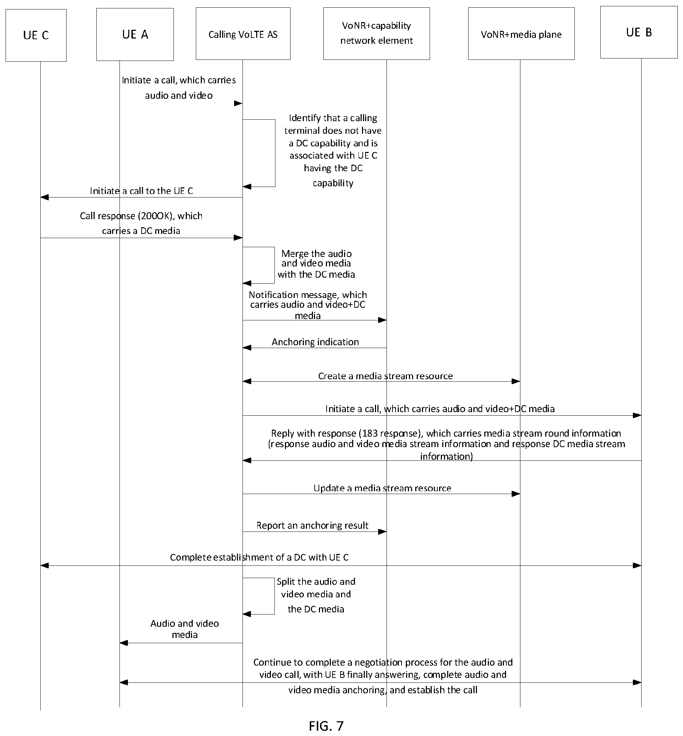

As shown in FIG. 7, FIG. 7 is a detailed flowchart of a communication processing method provided by the present embodiment. Taking a calling terminal as UE A, a called terminal as UE B, and a calling auxiliary terminal as UE C as an example.

The UE A initiates a call to call the UE B, a call request carries terminal audio and video information, and call information arrives at a calling VoLTE AS. If calling VoLTE AS identifies that the calling terminal UE A does not have a DC capability, and meanwhile the UE A sets up the associated calling auxiliary terminal UE C having the DC capability, then a call is initiated to the UE C. The UE C replies with a call response, such as a 200OK response, which carries DC media. The calling VoLTE AS merges a media of the calling terminal UE A and a media of the calling auxiliary terminal UE C, and reports a call event notification message to a VoNR+capability network element, wherein the call event notification message carries merged media information and other contents. After receiving the notification event, the VoNR+capability network element issues a media anchoring indication to the calling VoLTE AS. The calling VoLTE AS receives the anchoring indication and applies to a VoNR+media plane for creating a media stream resource. After receiving a response to applying for creating the media resource, the calling VoLTE AS initiates a call to the called terminal UE B, wherein the call carries audio and video+DC media. The UE B replies with the response, such as a 183 response, to the calling VoLTE AS, wherein the response carries response audio and video media stream information and response DC media stream information. The calling VoLTE AS updates the current media stream information to the VoNR+media plane. The calling VoLTE AS reports a media anchoring result to the VoNR+capability network element, and completes the establishment of a DC with the UE C. The calling VoLTE AS splits the negotiated media, separates the audio and video media, and constructs a 183 message to send the message to the UE A. The UE A and the UE B continue to complete a negotiation process for the audio and video call, and finally the UE B answers. The audio and video media anchoring is completed, and the call is established. During this process, the calling VoLTE AS still needs to perform media splitting and merging to ensure that the media negotiated with a UE A side is audio and video, while the media negotiated with a UE B side is audio and video+DC.

In the present embodiment, the UE A that does not support the DC capability establishes the audio and video call with the UE B, and the UE C that supports the DC capability establishes the DC call with the UE B, achieving the goal of enabling the UE A to perform the DC services through the UE C. The media during the subsequent call process is switched and updated, and the audio and video and DC still need to perform media splitting and merging according to the media on the terminal side to complete media negotiation.

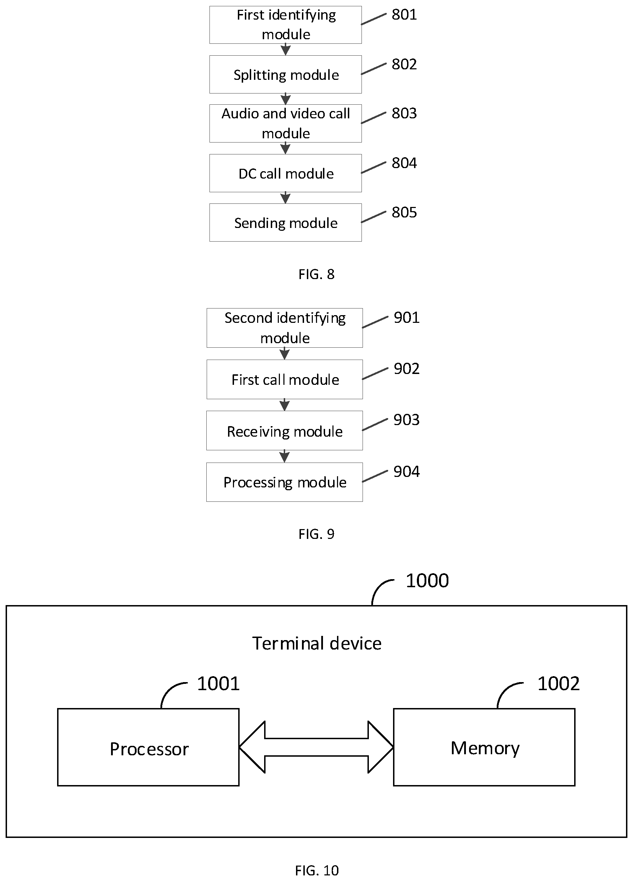

As shown in FIG. 8, FIG. 8 is a schematic structural diagram of a communication processing system provided by an embodiment of the present application. The communication processing system is applied to a called registration server and may include: a first identifying module 801, a splitting module 802, an audio and video call module 803, a DC call module 804, and a sending module 805.

The first identifying module 801 is configured to identify a data channel (DC) capability of a called terminal in a case of receiving a call request of a calling terminal, wherein the call request carries audio and video information and DC media information. The splitting module 802 is configured to split the call request into the audio and video information and the DC media information in a case where the called terminal does not have the DC capability and the called terminal is associated with a called auxiliary terminal having the DC capability. The audio and video call module 803 is configured to initiate an audio and video call to the called terminal according to the audio and video information. The DC call module 804 is configured to initiate a DC call to the called auxiliary terminal according to the DC media information. The sending module 805 is configured to perform merging processing on an audio and video media response returned by the called terminal and a DC media response returned by the called auxiliary terminal, and to send a merged response to the calling terminal.

In the embodiment of the present application, the first identifying module 801 of the called registration server identifies the DC capability of the called terminal in a case of receiving the call request of the calling terminal, wherein the call request carries the audio and video information and the DC media information; the splitting module 802 splits the call request into the audio and video information and the DC media information in a case where the called terminal does not have the DC capability and the called terminal is associated with the called auxiliary terminal having the DC capability; then the audio and video call module 803 initiates the audio and video call to the called terminal according to the audio and video information; the DC call module 804 initiates the DC call to the called auxiliary terminal according to the DC media information; and finally, the sending module 805 performs merging processing on the audio and video media response returned by the called terminal and the DC media response returned by the called auxiliary terminal, and sends the merged response to the calling terminal. In the embodiment of the present application, an auxiliary device having the DC capability is added to the call. By performing splitting and merging processing on the audio and video information and the DC media information, and establishing the DC call on the auxiliary device, audio and video calls can be achieved on an original terminal device and DC services can be experienced on auxiliary terminal device without the need to replace a terminal device.

In a possible implementation of the present application, the communication processing system may further include: a second sending module and a first application module.

The second sending module is configured to send the call request to a voice over new radio capability network element; and the first application module is configured to request a voice over new radio media plane to create a media stream resource in a case of receiving a media anchoring indication sent by the voice over new radio capability network element.

In a possible implementation of the present application, the media stream resource includes audio and video media stream information and DC media stream information. The audio and video call module 803 is configured to initiate the audio and video call to the called terminal through the audio and video media stream information; and the DC call module 804 is configured to initiate the DC call to the called auxiliary terminal through the DC media stream information.

In a possible implementation of the present application, the communication processing system may further include: a first receiving module and a first updating module.

The first receiving module is configured to receive the audio and video media response returned by the called terminal, wherein the audio and video media response carries response audio and video media stream information; and the first updating module is configured to update the response audio and video media stream information to the voice over new radio media plane.

In a possible implementation of the present application, the communication processing system may further include: a second receiving module and a second updating module.

The second receiving module is configured to receive the DC media response returned by the called auxiliary terminal, wherein the DC media response carries response DC media stream information; and the second updating module is configured to update the response DC media stream information to the voice over new radio media plane.

In a possible implementation of the present application, the communication processing system may further include: a first reporting module and a first establishing module.

The first reporting module is configured to report a DC media anchoring result to the voice over new radio capability network element; and the first establishing module is configured to establish a DC with the called auxiliary terminal.

The communication processing system provided by the embodiment of the present application can implement various processes implemented in the method embodiments of FIG. 1 to FIG. 5 and achieve the same technical effect, which will not be repeated here to avoid repetitions.

As shown in FIG. 9, FIG. 9 is a schematic structural diagram of a communication processing system provided by an embodiment of the present application. The communication processing system is applied to a calling registration server and may include: a second identifying module 901, a first call module 902, a receiving module 903, and a processing module 904.

The second identifying module 901 is configured to identify a DC capability of a calling terminal in a case of receiving a call request of the calling terminal, wherein the call request carries audio and video information. The first call module 902 is configured to initiate a first call request to a calling auxiliary terminal in a case where the calling terminal does not have the DC capability and the calling terminal is associated with a calling auxiliary terminal having the DC capability. The receiving module 903 is configured to receive a response of the calling auxiliary terminal, wherein the response carries DC media information. The processing module 904 is configured to perform merging processing on the audio and video information and the DC media information, and initiate a second call request to a called terminal, wherein the second call request carries the merged audio and video information and DC media information.

In the embodiment of the present application, the second identifying module 901 of the calling registration server identifies the DC capability of the calling terminal in a case of receiving the call request of the calling terminal, wherein the call request carries the audio and video information; the first call module 902 initiates the first call request to the calling auxiliary terminal in a case where the calling terminal does not have the DC capability and the calling terminal is associated with the calling auxiliary terminal having the DC capability; the receiving module 903 receives the response of the calling auxiliary terminal, wherein the response carries the DC media information; and the processing module 904 performs merging processing on the audio and video information and the DC media information, and initiates the second call request to the called terminal, wherein the second call request carries the merged audio and video information and DC media information. In the embodiment of the present application, an auxiliary device having the DC capability is added to the call. By performing merging processing on the audio and video information and the DC media information, and establishing a DC call with the called terminal through a calling auxiliary device, audio and video calls can be achieved on an original terminal device and DC services can be experienced on auxiliary terminal device without the need to replace a terminal device.

In a possible implementation of the present application, the communication processing system may further include: a second reporting module and a second application module.

The second reporting module is configured to report the second call request to a voice over new radio capability network element; the second application module is configured to request a voice over new radio media plane to create a media stream resource in a case of receiving a media anchoring indication sent by the voice over new radio capability network element; and the processing module 904 is configured to initiate the second call request to the called terminal in a case of receiving a creation response of the voice over new radio media plane.

In a possible implementation of the present application, the communication processing system may further include: a second receiving module and a second updating module.

The second receiving module is configured to receive a call response returned by the called terminal, wherein the call response carries response audio and video media stream information and response DC media stream information; and the second updating module is configured to update the response audio and video media stream information and the response DC media stream information to the voice over new radio media plane.

In a possible implementation of the present application, the communication processing system may further include: a third reporting module and a second establishing module.

The third reporting module is configured to report a DC media anchoring result to the voice over new radio capability network element; and the second establishing module is configured to establish a DC with the calling auxiliary terminal.

In a possible implementation of the present application, the communication processing system may further include: a separating module and a third sending module.

The separating module is configured to separate the response audio and video media stream information in the call response; and the third sending module is configured to send the response audio and video media stream information to the calling terminal.

The communication processing system provided by the embodiment of the present application can implement various processes implemented in the method embodiments of FIG. 6 to FIG. 7 and achieve the same technical effect, which will not be repeated here to avoid repetitions.

As shown in FIG. 10, an embodiment of the present application further provides a terminal device 1000, including a processor 1001, a memory 1002, and a program or an instruction stored on the memory 1002 and runnable on the processor 1001. The program or the instruction, when executed by the processor 1001, implements various processes of the above communication processing method embodiment and can achieve the same technical effect, which will not be repeated here to avoid repetitions.

An embodiment of the present application further provides a storage medium. The storage medium has a program or an instruction stored thereon, and the program or the instruction, when executed by a processor, implements various processes of the above communication processing method embodiment provides by any one of the above embodiments, can achieve the same technical effect, which will not be repeated here to avoid repetitions.

The processor is a processor in the terminal device in the above embodiment. The storage medium includes a computer storage medium, such as a computer read-only memory (ROM), a random access memory (RAM), a magnetic disk, or an optical disc.

An embodiment of the present application further provides a chip. The chip includes a processor and a communication interface, the communication interface is coupled with the processor, and the processor is used for running a program or an instruction to implement various processes of the above communication processing method embodiment and can achieve the same technical effects, which is not repeated here to avoid repetitions.

It should be understood that the chip mentioned in the embodiment of the present application may further be referred to as a system-level chip, a system chip, a chip system, or a system on chip.

An embodiment of the present application further provides a computer program/program product. The computer program/program product is stored in a storage medium, and the computer program/program product is executed by at least one processor to implement various processes of the above communication processing method embodiment and can achieve the same technical effect, which is not repeated here to avoid repetitions.

An embodiment of the present application further provides a processing apparatus. The processing apparatus is configured to implement various processes of the above communication processing method embodiment and can achieve the same technical effect, which is not repeated here to avoid repetitions.

It should be noted that terms "including," "containing", or any other variations herein are intended to cover non-exclusive inclusion, such that a process, method, item or apparatus that includes a series of elements not only includes those elements, but also other elements that are not explicitly listed, or further include elements inherent in such the process, method, item or apparatus. Without more limitations, elements defined by a statement "including one" do not exclude the existence of other identical elements in the process, method, item or apparatus that includes the said elements. In addition, it is to be pointed out that the scope of the methods and apparatuses in the implementations of the present application is not limited to performing functions in an order shown or discussed, but may further include performing functions in a substantially simultaneous mode or in an opposite order according to the involved functions. For example, the described methods may be executed in a different order from the described ones, and various steps may also be added, omitted, or combined. In addition, features described with reference to certain examples may be combined in other examples.

According to the descriptions in the foregoing implementations, those skilled in the art may clearly learn that the method according to the above embodiment may be implemented by relying on software and a necessary common hardware platform or by using hardware. However, in many cases, the former is the better implementation. Based on such an understanding, the technical solutions of the present application essentially, or the part contributing to the prior art, may be presented in the form of a computer software product. The computer software product is stored in a storage medium (such as an ROM/RAM, a magnetic disk, or an optical disc) including several instructions to enable a terminal (which may be a mobile phone, a computer, a server, a network device, or the like) to perform the methods described in all the embodiments of the present application.

The embodiments of the present application have been described above with reference to the accompanying drawings. However, the present application is not limited to the above specific implementations, and the above specific implementations are merely exemplary and not limitative. Those of ordinary skill in the art may make various variations under the teaching of the present application without departing from the spirit of the present application and the protection scope of the claims, and such variations shall all fall within the protection scope of the present application.

## Claims

1. A communication processing method, applied to a called registration server, comprising:
identifying a data channel DC capability of a called terminal in a case of receiving a call request of a calling terminal, wherein the call request carries audio and video information and DC media information;
splitting the call request into the audio and video information and the DC media information in a case where the called terminal does not have the DC capability and the called terminal is associated with a called auxiliary terminal having DC capability;
initiating an audio and video call to the called terminal according to the audio and video information;
initiating a DC call to the called auxiliary terminal according to the DC media information; and
performing merging processing on an audio and video media response returned by the called terminal and a DC media response returned by the called auxiliary terminal, and sending a merged response to the calling terminal.

2. The method according to claim 1, wherein after receiving the call request of the calling terminal, the method further comprises:
sending the call request to a voice over new radio capability network element; and
requesting a voice over new radio media plane to create a media stream resource in a case of receiving a media anchoring indication sent by the voice over new radio capability network element.

3. The method according to claim 2, wherein the media stream resource comprises audio and video media stream information and DC media stream information;
initiating the audio and video call to the called terminal according to the audio and video information comprises:
initiating the audio and video call to the called terminal through the audio and video media stream information; and
initiating the DC call to the called auxiliary terminal according to the DC media information comprises:
initiating the DC call to the called auxiliary terminal through the DC media stream information.

4. The method according to claim 2, wherein after initiating the audio and video call to the called terminal, the method further comprises:
receiving the audio and video media response returned by the called terminal, wherein the audio and video media response carries response audio and video media stream information; and
updating the response audio and video media stream information to the voice over new radio media plane.

5. The method according to claim 2, wherein after initiating the DC call to the called auxiliary terminal, the method further comprises:
receiving the DC media response returned by the called auxiliary terminal, wherein the DC media response carries response DC media stream information; and
updating the response DC media stream information to the voice over new radio media plane.

6. The method according to claim 2, wherein before performing merging processing on the audio and video media response returned by the called terminal and the DC media response returned by the called auxiliary terminal, the method further comprises:
reporting a DC media anchoring result to the voice over new radio capability network element; and
establishing a DC with the called auxiliary terminal.

7. A communication processing method, applied to a calling registration server, comprising:
identifying a DC capability of a calling terminal in a case of receiving a call request of the calling terminal, wherein the call request carries audio and video information;
initiating a first call request to a calling auxiliary terminal in a case where the calling terminal does not have the DC capability and the calling terminal is associated with a calling auxiliary terminal having DC capability;
receiving a response of the calling auxiliary terminal, wherein the response carries DC media information; and
performing merging processing on the audio and video information and the DC media information, and initiating a second call request to a called terminal, wherein the second call request carries the merged audio and video information and DC media information.

8. The method according to claim 7, wherein after performing merging processing on the audio and video information and the DC media information, the method further comprises:
reporting the second call request to a voice over new radio capability network element;
requesting a voice over new radio media plane to create a media stream resource in a case of receiving a media anchoring indication sent by the voice over new radio capability network element; and
initiating the second call request to the called terminal in a case of receiving a creation response of the voice over new radio media plane.

9. The method according to claim 8, wherein after initiating the second call request to the called terminal, the method further comprises:
receiving a call response returned by the called terminal, wherein the call response carries response audio and video media stream information and response DC media stream information; and
updating the response audio and video media stream information and the response DC media stream information to the voice over new radio media plane.

10. The method according to claim 8, further comprising:
reporting a DC media anchoring result to the voice over new radio capability network element; and
establishing a DC with the calling auxiliary terminal.

11. The method according to claim 9, wherein after receiving the call response returned by the called terminal, the method further comprises:
separating the response audio and video media stream information in the call response; and
sending the response audio and video media stream information to the calling terminal.

12. A terminal device, comprising a processor, a memory, and a program or an instruction stored on the memory and runnable on the processor, wherein the program or the instruction, when executed by the processor, implements the steps of the method according to any one of claims 1 to 6, or implements the steps of the method according to any one of claims 7 to 11.

13. A storage medium, wherein the storage medium has a program or an instruction stored thereon, and the program or the instruction, when executed by a processor, implements the steps of the method according to any one of claims 1 to 6, or implements the steps of the method according to any one of claims 7 to 11.
